# EUROPEAN PATENT APPLICATION

(11) **EP 4 763 934 A1**
(43) Date of publication of application: **24.06.2026**
(21) Application number: 24864453.6
(22) Date of filing: 28.08.2024
(51) Int. Cl.: C09J 7/29, H01M 50/242, H01M 50/204, H01M 50/244

(54) **BONDING ASSEMBLY, BATTERY AND ELECTRIC DEVICE**

(30) Priority: 14.09.2023 CN 202311182630
(71) Applicant: Contemporary Amperex Technology Co., Limited, Ningde, Fujian 352100 (CN)
(72) Inventor: DU, Jie, Ningde, Fujian 352100 (CN); YU, Jingjing, Ningde, Fujian 352100 (CN); GUO, Haijian, Ningde, Fujian 352100 (CN)
(74) Representative: Kraus & Lederer PartGmbB
(86) International application number: PCT/CN2024/115158
(87) International publication number: WO 2025/055731

(57) **Abstract**

The present application relates to a bonding assembly, a battery and an electric device. The bonding assembly comprises a main body member and a connecting member, wherein the main body member comprises first rubber; and the connecting member is connected to at least one side of the main body member in its own thickness direction, and the connecting member comprises a base material, a connecting layer and a bonding layer, the connecting layer being arranged on the side of the base material facing the main body member, and bonding the base material to the main body member, the connecting layer comprising second rubber, the second rubber and the first rubber being made of the same material or different materials, and the bonding layer being bonded to the side of the base material facing away from the connecting layer. When used in a battery, the bonding assembly can improve the structural stability of the battery.

## Description

### CROSS-REFERENCE TO RELATED APPLICATIONS

The present application claims priority to Chinese Patent Application No. 202311182630.0, filed on September 14, 2023 and entitled "BONDING ASSEMBLY, BATTERY, AND ELECTRIC APPARATUS", which is incorporated herein by reference in its entirety.

### TECHNICAL FIELD

The present application relates to the field of battery technology, and more specifically, to a bonding assembly, a battery, and an electric apparatus.

### BACKGROUND

Batteries have characteristics such as high capacity and long service life, and thus are widely used in electronic devices such as mobile phones, laptop computers, electric bicycles, electric vehicles, electric airplanes, electric ships, electric toy cars, electric toy ships, electric toy airplanes, and electric tools. Due to significant development of batteries, higher requirements are imposed on the performance of the batteries.

However, the structural stability of battery cells is still poor.

### SUMMARY

The present application provides a bonding assembly, a battery, and an electric apparatus, so that the structural stability of the battery in the present application can be improved.

According to a first aspect, an embodiment of the present application provides a bonding assembly, where the bonding assembly includes a main body member and a connecting member; the main body member includes a first rubber; the connecting member is connected to at least one side of the main body member along its thickness direction; the connecting member includes a substrate, a connecting layer, and a bonding layer; the connecting layer is provided on a side of the substrate facing the main body member and bonds the substrate to the main body member; the connecting layer includes a second rubber; materials of the second rubber and the first rubber are the same or different; and the bonding layer is bonded to a side of the substrate facing away from the connecting layer.

Thus, according to the bonding assembly in this embodiment of the present application, the bonding assembly includes the main body member and the connecting member. The main body member can buffer the volume swelling of a battery cell, improving the structural stability of a battery. The connecting member is connected to the main body member and can bond the main body member to the battery cell; and the connecting member is connected to the main body member through the connecting layer. The materials of the connecting layer and the main body member are rubber materials. The compatibility of the materials is high. An interfacial bonding force between the connecting layer and the main body member is strong, so that the connection stability between the connecting layer and the main body member can be improved, improving the structural stability of the bonding assembly. When the bonding assembly is used in the battery, the structural stability of the battery can be improved.

In some embodiments, the connecting layer is bonded to a surface of the main body member, and the tensile shear strength of the connecting layer is greater than or equal to 0.42 MPa, optionally 0.42 MPa to 0.72 MPa.

Thus, when the tensile shear strength of the connecting layer in the embodiments of the present application is in the above range, the bonding force between the connecting layer and the main body member is strong, so that the two are not prone to detachment, thereby improving the overall structural stability of the bonding assembly.

In some embodiments, elastic moduli of the first rubber and the second rubber are each independently selected from a range of 0.1 MPa to 20 MPa, optionally 0.1 MPa to 10 MPa, and optionally 0.1 MPa to 5 MPa. During charging and discharging of the battery cell, the battery cell may undergo volume swelling and apply an extrusion force to the first rubber, so that the first rubber can undergo deformation to some extent under the action of the extrusion force, reducing the risk of the battery cell being crushed, and improving the overall structural stability of the battery.

In some embodiments, the first rubber and the second rubber each independently include at least one of a polyolefin polymer and an organosiloxane polymer. Optionally, the first rubber and the second rubber each independently include the organosiloxane polymer; optionally, the polyolefin polymer includes at least one of cis-1,4-polyisoprene, cis-1,4-polybutadiene, polychloroprene, and ethylene propylene diene monomer terpolymer, and the organosiloxane polymer includes at least one of polydimethylsiloxane, polymethylvinylsiloxane, polymethylphenylvinylsiloxane, and polyfluorosiloxane; and optionally, the first rubber and the second rubber each independently include the organosiloxane polymer.

Thus, the first rubber and the second rubber in the embodiments of the present application have high compatibility, helping to improve the structural stability of the bonding assembly. A primer coating process may not be performed on the surface of the main body member, that is, the connecting member and the main body member can be bonded integrally, so that the problem of poor process stability caused by the primer coating process is also avoided; moreover, due to the high compatibility and strong bonding force between the connecting layer and the main body member, the two are not prone to detachment.

In some embodiments, a ratio of a thickness of the connecting layer to a thickness of the main body member is 1:(29 to 200), optionally 1:(29 to 167). Optionally, the thickness of the connecting layer is 15 µm to 35 µm. Optionally, the thickness of the main body member is 1000 µm to 3000 µm. When the ratio of the thickness of the connecting layer to the thickness of the main body member is in the above range, the bonding strength between the connecting layer and the main body member can be improved, thereby improving the overall structural stability of the bonding assembly.

In some embodiments, the bonding layer is configured to be bonded to a metal surface, and the tensile shear strength of the bonding layer is greater than or equal to 1.34 MPa, optionally 1.34 MPa to 3.0 MPa. When the tensile shear strength of the bonding layer is in the above range, the bonding force between the bonding layer and the metal is strong, so that the two are not prone to detachment, thereby improving the overall structural stability of the bonding assembly.

In some embodiments, the bonding layer is configured to be bonded to an organic polymer surface, and the tensile shear strength of the bonding layer is greater than or equal to 1.34 MPa, optionally 1.34 MPa to 3.0 MPa. When the tensile shear strength of the bonding layer is in the above range, the bonding force between the bonding layer and the organic polymer is strong, so that the two are not prone to detachment, thereby improving the overall structural stability of the bonding assembly.

In some embodiments, the bonding layer includes an acrylate polymer. Optionally, the acrylate polymer includes at least one of polymethyl methacrylate, polyethyl acrylate, and polybutyl acrylate. The bonding force between the bonding layer and the battery cell is stronger. In addition, since a primer coating process is required when the bonding layer and the main body member are directly bonded, the connecting layer is disposed between the bonding layer and the main body member in the embodiments of the present application, processes such as the primer coating process can be omitted on the basis of improving the bonding strength between the main body member and the bonding layer.

In some embodiments, a thickness of the bonding layer is 15 µm to 25 µm. When the thickness of the bonding layer is in the above range, the bonding force between the bonding layer and the battery cell is strong.

In some embodiments, the substrate includes at least one of polyethylene terephthalate, polypropylene, polycarbonate, and polyamide. When the substrate is selected from the above materials, the substrate can play a supporting role.

In some embodiments, a thickness of the substrate is 5 µm to 15 µm, optionally 5 µm to 12 µm. When the thickness of the substrate is in the above range, good support can be provided for the bonding assembly.

In some embodiments, the connecting member is connected to two sides of the main body member along its thickness direction, which can improve the connection stability between the connecting member and the main body member, improving the structural stability of the bonding assembly. When the bonding assembly is used in the battery, the structural stability of the battery can be improved.

According to a second aspect, an embodiment of the present application further provides a battery, where the battery includes the bonding assembly according to any one of the embodiments of the first aspect of the present application and a battery cell, the bonding assembly is connected to the battery cell, and the bonding layer of the bonding assembly is bonded to a surface of the battery cell.

In some embodiments, a plurality of battery cells are provided, and the bonding assembly is provided between two adjacent battery cells.

In some embodiments, the battery cell includes two first surfaces opposite each other and two second surfaces opposite each other; the first surface is connected to the two second surfaces; an area of the first surface is greater than an area of the second surface; the first surface is disposed opposite the bonding assembly; and the first surface is bonded to the bonding layer.

According to a third aspect, an embodiment of the present application further provides an electric apparatus, where the electric apparatus includes the battery according to any one of the embodiments of the third aspect of the present application.

### BRIEF DESCRIPTION OF DRAWINGS

To describe the technical solutions of the embodiments of the present application more clearly, the following briefly describes the accompanying drawings required for describing the embodiments of the present application. Apparently, the accompanying drawings in the following description show merely some embodiments of the present application, and those of ordinary skill in the art may still derive other accompanying drawings from the accompanying drawings without creative efforts.
FIG. 1 is a schematic diagram of an embodiment of a bonding assembly of the present application.
FIG. 2 is a schematic diagram of an embodiment of a battery module of the present application.
FIG. 3 is a schematic diagram of an embodiment of a battery cell in a battery of the present application.
FIG. 4 is an exploded view of an embodiment of the battery cell in FIG. 3.
FIG. 5 is a schematic diagram of an embodiment of a battery module of the present application.
FIG. 6 is a schematic diagram of an embodiment of a battery pack of the present application.
FIG. 7 is an exploded view of an embodiment of the battery pack in FIG. 6.
FIG. 8 is a schematic diagram of an embodiment of an electric apparatus including a battery cell of the present application as a power source.

The accompanying drawings are not necessarily drawn to actual scale.

The reference signs in the accompanying drawings are described as follows:
1. battery pack; 2. upper box body; 3. lower box body; 4. battery module;
5. battery cell; 51. housing; 52. electrode assembly;
53. cover plate;
6. electric apparatus;
7. bonding assembly; 71. main body member; 72. connecting member; 721. connecting layer; 722. substrate; and 723. bonding layer.

### DESCRIPTION OF EMBODIMENTS

Embodiments that specifically disclose a bonding assembly, a battery, and an electric apparatus in the present application are described in detail below with reference to the accompanying drawings as appropriate. However, there may be cases where unnecessary detailed descriptions are omitted. For example, detailed descriptions of well-known matters and repeated descriptions of actually identical structures have been omitted. This is to avoid unnecessarily prolonging the following descriptions, for ease of understanding by those skilled in the art. In addition, the accompanying drawings and the following descriptions are provided for those skilled in the art to fully understand the present application and are not intended to limit the subject described in the claims.

"Ranges" disclosed in the present application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if lower limit values of a range are given as 1 and 2, and upper limit values of the range are given as 3, 4, and 5, the following ranges can all be envisioned: 1-3, 1-4, 1-5, 2-3, 2-4, and 2-5. In the present application, unless otherwise specified, a value range of "a-b" is a short representation of any combinations of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and the like.

Unless otherwise specified, all embodiments and optional embodiments of the present application can be combined with each other to form a new technical solution.

Unless otherwise specified, all technical features and optional technical features of the present application can be combined with each other to form a new technical solution.

Unless otherwise specified, all the steps in the present application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

In the present application, "a plurality of" means more than two (inclusive).

In the present application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. The battery cell may be cylindrical, flat, cuboid, or of other shapes, which is not limited in the embodiments of the present application either. Battery cells are typically divided into three types by packaging method: cylindrical cell, prismatic cell, and pouch cell, which is not limited in the embodiments of the present application either.

The battery mentioned in the embodiments of the present application refers to a single physical module that includes one or more battery cells to provide higher voltage and capacity. For example, the battery mentioned in the present application may include a battery module, a battery pack, or the like. A battery typically includes a box for encapsulating one or more battery cells. The box can prevent liquids or other foreign objects from affecting the charging or discharging of the battery cells.

In a case that the battery includes a plurality of battery cells, in order to improve the structural stability of the battery, a bonding assembly is typically disposed between two adjacent battery cells, but the internal structural stability of the bonding assembly may be poor, leading to problems such as delamination and peeling of the bonding assembly, and making the structural stability of the battery after the bonding assembly and the battery cells are assembled to form the battery.

In view of the above problems, an embodiment of the present application provides a bonding assembly. The bonding assembly includes a main body member and a connecting member connected to at least one side of the main body member. The connecting member is a multi-layer structure. The connecting member is connected to the main body member through a connecting layer. The connecting layer and the main body member are both mainly made of rubber materials. The materials have similar structures, and a bonding force between the two is strong, so that the main body member and the connecting member are not prone to delamination and peeling, thereby improving the structural stability of the bonding assembly. When the bonding assembly is used in a battery, the structural stability of the battery can be improved. The following describes the technical solutions of the present application in detail.

### [Bonding assembly]

According to a first aspect, an embodiment of the present application provides a bonding assembly.

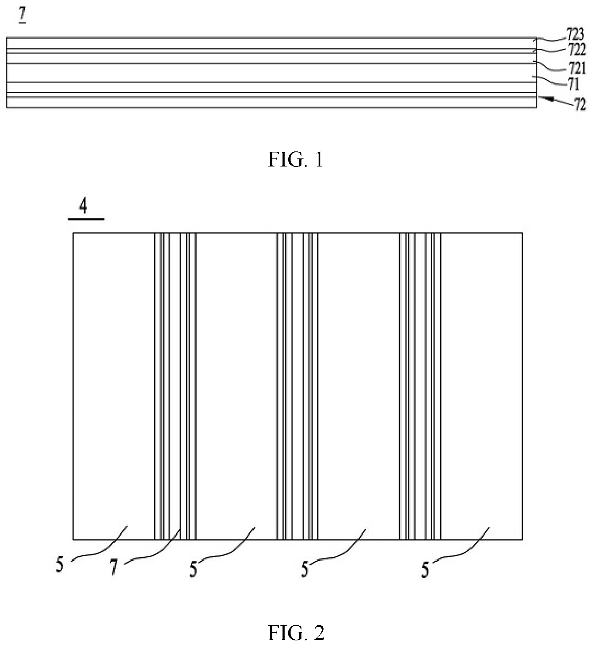

As shown in FIG. 1, the bonding assembly 7 includes a main body member 71 and a connecting member 72. The main body member 71 includes a first rubber. The connecting member 72 is connected to at least one side of the main body member 71 along its thickness direction. The connecting member 72 includes a substrate 722, a connecting layer 721, and a bonding layer 723. The connecting layer 721 is provided on a side of the substrate 722 facing the main body member 71 and bonds the substrate 722 to the main body member 71. The connecting layer 721 includes a second rubber. Materials of the second rubber and the first rubber are the same or different. The bonding layer 723 is bonded to a side of the substrate 722 facing away from the connecting layer 721.

The main body member 71 includes the first rubber. The first rubber has elasticity, can deform under the action of an external force, and can recover its original shape after the external force is removed, that is, the first rubber has a reversible deformation capability. In some embodiments, a main material of the main body member 71 includes the first rubber, that is, it can be understood that the main body member 71 is mainly made of the first rubber. In some other embodiments, the main body member 71 includes a central region and an edge region. The edge region is disposed around the central region and connected to the central region. The edge region may be made of the first rubber. The central region may be made of at least one of other materials such as an aerogel thermal insulation material, mica, rubber, and the like. The rubber material of the central region is different from the rubber material of the edge region. The aerogel thermal insulation pad may include at least one of a silica material with ceramic fiber as a base material, a silica material with pre-oxidized fiber as a base material, and a silica material with glass fiber as a base material. The mica is a layered silicate mineral material. When the bonding assembly 7 is used in a battery, during charge and discharge cycles of the battery, a battery cell in the battery may undergo volume swelling and apply an acting force such as an extrusion force to the main body member 71, so that the main body member 71 can deform to alleviate the extrusion force, reducing the risk of the battery cell being crushed by extrusion, and improving the structural stability of the battery.

The main body member 71 may be a layered structure such as a single-layer structure or a multi-layer structure. When the main body member 71 is a multi-layer structure, materials of the multi-layer structure may be the same or different.

The main body member 71 includes two sides opposite each other along its thickness direction. At least one of the two sides is connected to the connecting member 72, that is, one of the two sides may be connected to the connecting member 72, and the other side is connected to other adhesive layers such as an acrylate pressure-sensitive adhesive; or the two sides are each connected to the connecting member 72. In the manner where the sides are each connected to the connecting member 72, the overall structural stability of the bonding assembly 7 is higher, and the connection strength between the bonding assembly and battery cells on two sides can be improved. The connecting member 72 is configured to be bonded to the battery cell in the battery. The connecting member 72 is a multi-layer structure. For example, the connecting member 72 includes a substrate 722, a connecting layer 721, and a bonding layer 723. The substrate 722 can support the connecting member 72. The connecting layer 721 is located on one side of the substrate 722 along a thickness direction. The bonding layer 723 is located on the other side of the substrate 722 along the thickness direction. The connecting layer 721 bonds the substrate 722 to the main body member 71. The bonding layer 723 is configured to bond the substrate 722 to the battery cell.

The connecting layer 721 includes the second rubber. The second rubber also has a reversible deformation capability and can further alleviate the volume swelling during charge and discharge cycles of the battery cell. The materials of the second rubber and the first rubber may be the same or different. Since both the connecting layer 721 and the main body member 71 are made of rubber materials, the compatibility of the materials is high. An interfacial bonding force between the connecting layer 721 and the main body member 71 is strong. The connecting layer 721 can be directly connected to a surface of the main body member 71, thereby improving the connection stability between the connecting layer 721 and the main body member 71. Optionally, the connecting layer 721 is connected to the surface of the main body member 71. When the bonding assembly 7 is used in the battery, during charge and discharge cycles of the battery, the battery cell in the battery may undergo volume swelling and apply an acting force such as an extrusion force to the connecting member 72, so that the connecting layer 721 in the connecting member 72 can deform to alleviate the extrusion force, reducing the risk of the battery cell being crushed by extrusion, and improving the structural stability of the battery.

Compared with the related art, due to the poor compatibility between the material of the acrylate pressure-sensitive adhesive and the rubber material, the connection stability between the pressure-sensitive adhesive and the rubber is poor. In order to improve the connection stability between the pressure-sensitive adhesive and the rubber, in the related art, a primer coating is provided on the surface of the rubber to enhance the interfacial bonding force between the pressure-sensitive adhesive and the rubber. However, due to the poor stability of the primer coating process, when the release paper is removed, a local region of the pressure-sensitive adhesive may detach from the surface of the rubber, leading to unstable bonding between the two. The connection stability between the pressure-sensitive adhesive and the rubber still cannot be significantly improved. Whereas, the connecting layer 721 and the main body member 71 in this embodiment of the present application are both made of rubber materials. The compatibility of the materials is high. The interfacial bonding force between the connecting layer 721 and the main body member 71 is strong, so that the connecting layer 721 can be directly connected to the surface of the main body member 71. The interfacial bonding force between the connecting layer 721 and the main body member 71 can be enhanced without providing a primer coating on the surface of the main body member 71.

According to the bonding assembly 7 in this embodiment of the present application, the bonding assembly 7 includes the main body member 71 and the connecting member 72. The main body member 71 can buffer the volume swelling of the battery cell, improving the structural stability of the battery. The connecting member 72 is connected to the main body member 71 and can bond the main body member 71 to the battery cell; and the connecting member 72 is connected to the main body member 71 through the connecting layer 721. The materials of the connecting layer 721 and the main body member 71 are rubber materials. The compatibility of the materials is high. The interfacial bonding force between the connecting layer 721 and the main body member 71 is strong, so that the connection stability between the connecting layer 721 and the main body member 71 can be improved, improving the structural stability of the bonding assembly 7. When the bonding assembly 7 is used in the battery, the structural stability of the battery can be improved.

In some embodiments, an elastic modulus of the first rubber is 0.1 MPa to 20 MPa, optionally 0.1 MPa to 10 MPa, optionally 0.1 MPa to 5 MPa, and optionally 3 MPa to 5 MPa.

The elastic modulus mainly refers to the maximum stress required for the first rubber to undergo unit elastic deformation under the action of an external force, which can reflect the capability of the first rubber in resisting elastic deformation. During charging and discharging of the battery cell, the battery cell may undergo volume swelling and apply an extrusion force to the first rubber, so that the first rubber can undergo deformation to some extent under the action of the extrusion force, reducing the risk of the battery cell being crushed, and improving the overall structural stability of the battery.

Exemplarily, the elastic modulus of the first rubber may be 0.10 MPa, 0.20 MPa, 0.30 MPa, 0.40 MPa, 0.50 MPa, 0.80 MPa, 1.00 MPa, 1.50 MPa, 2.00 MPa, 2.50 MPa, 3.00 MPa, 3.50 MPa, 4.00 MPa, 5.00 MPa, 6 MPa, 7 MPa, 8 MPa, 9 MPa, 10 MPa, 12 MPa, 13 MPa, 15 MPa, 18 MPa, 20 MPa, or a range defined by any two of the above values.

In the present application, the elastic modulus of the material has a well-known meaning in the art and can be tested using instruments and methods well known in the art, for example, it can be tested in accordance with GB/T 14694-1993 test method of compressive elastic modulus of plastics.

In some embodiments, the first rubber may include at least one of an olefin polymer and an organosiloxane polymer. Optionally, the olefin polymer includes at least one of cis-1,4-polyisoprene, cis-1,4-polybutadiene, polychloroprene, the organosiloxane polymer, and ethylene propylene diene monomer terpolymer EPDM. The first rubber including the above materials has high compatibility with the connecting layer 721, helping to improve the structural stability of the bonding assembly 7.

The organosiloxane polymer refers to a polymer whose molecular main chain is mainly formed by alternating silicon atoms and oxygen atoms.

Optionally, the organosiloxane polymer may include at least one of polydimethylsiloxane PDMS, polymethylvinylsiloxane PMVS, polymethylphenylvinylsiloxane, and polyfluorosiloxane.

In some embodiments, a thickness of the main body member 71 may be 1000 µm to 3000 µm. When the thickness of the main body member 71 is in the above range, the overall deformation capability of the bonding assembly 7 can be improved, thereby improving the overall structural stability of the battery.

Exemplarily, the thickness of the main body member 71 may be 1000 µm, 1100 µm, 1200 µm, 1300 µm, 1400 µm, 1500 µm, 1600 µm, 1700 µm, 1800 µm, 1900 µm, 2000 µm, 2100 µm, 2200 µm, 2300 µm, 2400 µm, 2500 µm, 2600 µm, 2700 µm, 2800 µm, 2900 µm, 3000 µm, or a range defined by any two of the above values.

In some embodiments, the connecting layer 721 is bonded to the surface of the main body member 71, and the tensile shear strength of the connecting layer 721 is greater than or equal to 0.3 MPa, optionally 0.3 MPa to 0.7 MPa. When the tensile shear strength of the connecting layer 721 is in the above range, the bonding force between the connecting layer 721 and the main body member 71 is strong, so that the two are not prone to detachment, thereby improving the overall structural stability of the bonding assembly 7.

In the embodiments of the present application, the tensile shear strength has a well-known meaning in the art. Specifically, the shear strength of the connecting layer 721 refers to the shear force that the connecting layer 721 can withstand per unit area when the connecting layer 721 is destroyed, which can be tested in accordance with GB/T7124-2008. For example, the test can be performed as follows: the connecting layer 721 of the connecting member 72 is bonded to the surface of the main body member 71 and left standing within 20 min, and the tensile shear strength of the connecting layer 721 is greater than or equal to 0.3 MPa, optionally greater than or equal to 0.42 MPa, and optionally 0.42 MPa to 0.55 MPa. The connecting layer 721 of the connecting member 72 being bonded to the surface of the main body member 71 and left standing within 20 min means that timing is started when the connecting layer 721 is bonded to the surface of the main body member 71, and the tensile shear strength is tested within 20 min. For another example, the test can be performed as follows: the connecting layer 721 is bonded to the surface of the main body member 71 and left standing for more than 3 days, and the tensile shear strength of the connecting layer 721 is greater than or equal to 0.4 MPa, optionally 0.42 MPa to 0.72 MPa, and optionally 0.5 MPa to 0.72 MPa.

Exemplarily, the tensile shear strength of the connecting layer 721 may be 0.30 MPa, 0.35 MPa, 0.38 MPa, 0.40 MPa, 0.42 MPa, 0.45 MPa, 0.48 MPa, 0.50 MPa, 0.52 MPa, 0.55 MPa, 0.56 MPa, 0.58 MPa, 0.60 MPa, 0.62 MPa, 0.65 MPa, 0.68 MPa, 0.70 MPa, 0.72 MPa, or a range defined by any two of the above values.

In some embodiments, an elastic modulus of the second rubber is 0.1 MPa to 20 MPa, optionally 0.1 MPa to 10 MPa, optionally 0.1 MPa to 5 MPa, and optionally 3 MPa to 5 MPa.

The elastic modulus mainly refers to the maximum stress required for the second rubber to undergo unit elastic deformation under the action of an external force, which can reflect the capability of the second rubber in resisting elastic deformation. During charging and discharging of the battery cell, the battery cell may undergo volume swelling and apply an extrusion force to the second rubber, so that the second rubber can undergo deformation to some extent under the action of the extrusion force, reducing the risk of the battery cell being crushed, and improving the overall structural stability of the battery.

Exemplarily, the elastic modulus of the second rubber may be 0.10 MPa, 0.20 MPa, 0.30 MPa, 0.40 MPa, 0.50 MPa, 0.80 MPa, 1.00 MPa, 1.50 MPa, 2.00 MPa, 2.50 MPa, 3.00 MPa, 3.50 MPa, 4.00 MPa, 5.00 MPa, 6 MPa, 7 MPa, 8 MPa, 9 MPa, 10 MPa, 12 MPa, 13 MPa, 15 MPa, 18 MPa, 20 MPa, or a range defined by any two of the above values.

In some embodiments, the second rubber includes at least one of an olefin polymer and an organosiloxane polymer. Optionally, the olefin polymer includes at least one of cis-1,4-polyisoprene, cis-1,4-polybutadiene, polychloroprene, the organosiloxane polymer, and ethylene propylene diene monomer terpolymer EPDM. Optionally, the first rubber and the second rubber each independently include the organosiloxane polymer. The second rubber including the above materials has high compatibility with the main body member 71, helping to improve the structural stability of the bonding assembly 7. A primer coating process may not be performed on the surface of the main body member 71, that is, the main body member 71 and the connecting member 72 can be bonded integrally, so that the problem of poor process stability caused by the primer coating process is also avoided; moreover, due to the high compatibility and strong bonding force between the connecting layer 721 and the main body member 71, the two are not prone to detachment.

Optionally, the organosiloxane polymer may include at least one of polydimethylsiloxane, polymethylvinyl, polymethylphenylvinyl, and polyfluorosiloxane.

In some embodiments, a ratio of a thickness of the connecting layer 721 to the thickness of the main body member 71 is 1:(15 to 200), optionally 1:(29 to 200), and optionally 1:(29 to 167). When the ratio of the thickness of the connecting layer 721 to the thickness of the main body member 71 is in the above range, the bonding strength between the connecting layer 721 and the main body member 71 can be improved, thereby improving the overall structural stability of the bonding assembly 7.

Exemplarily, the ratio of the thickness of the connecting layer 721 to the thickness of the main body member 71 may be 1:15, 1:18, 1:20, 1:22, 1:23, 1:25, 1:28, 1:29, 1:30, 1:35, 1:40, 1:45, 1:48, 1:50, 1:55, 1:60, 1:65, 1:70, 1:75, 1:80, 1:85, 1:90, 1:95, 1:100, 1:105, 1:110, 1:115, 1:120, 1:125, 1:130, 1:135, 1:140, 1:145, 1:150, 1:155, 1:160, 1:167, 1:170, 1:175, 1:180, 1:185, 1:190, 1:195, 1:200, or a range defined by any two of the above values.

In some embodiments, the thickness of the connecting layer 721 is 15 µm to 35 µm. The thickness of the connecting layer 721 being in the above range helps to improve the bonding force between the connecting layer 721 and the main body member 71.

Exemplarily, the thickness of the connecting layer 721 may be 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, or a range defined by any two of the above values.

In some embodiments, the substrate 722 may include at least one of polyethylene terephthalate PET, polypropylene PP, polycarbonate PC, and polyamide PA. When the substrate 722 is selected from the above materials, the substrate 722 can play a supporting role.

In some embodiments, a thickness of the substrate 722 is 5 µm to 15 µm, optionally 6 µm to 15 µm, optionally 10 µm to 15 µm, and optionally 10 µm to 12 µm. When the thickness of the substrate 722 is in the above range, good support can be provided for the bonding assembly 7.

Exemplarily, the thickness of the substrate 722 may be 5 µm, 6 µm, 7 µm, 8 µm, 9 µm, 10 µm, 11 µm, 12 µm, 13 µm, 14 µm, 15 µm, or a range defined by any two of the above values.

In some embodiments, when the bonding assembly 7 is assembled to the battery, the bonding assembly 7 may be in contact with a housing of the battery cell. The housing may be made of a metal material. For example, the metal material may include aluminum metal, copper metal, or stainless steel. The bonding layer 723 of the bonding assembly 7 is configured to be bonded to a metal surface, and the tensile shear strength of the bonding layer 723 is greater than or equal to 0.7 MPa; optionally 0.7 MPa to 3.0 MPa, and optionally 1.34 MPa to 3.0 MPa. When the tensile shear strength of the bonding layer 723 is in the above range, the bonding force between the bonding layer 723 and the metal is strong, so that the two are not prone to detachment, thereby improving the overall structural stability of the bonding assembly 7.

Exemplarily, the bonding layer 723 of the bonding assembly 7 is configured to be bonded to an aluminum metal surface, and the tensile shear strength of the bonding layer 723 is greater than or equal to 0.7 MPa, optionally 0.7 MPa to 3.0 MPa, and optionally 1.34 MPa to 3.0 MPa.

When the tensile shear strength of the bonding layer 723 is in the above range, the bonding force between the bonding layer 723 and the aluminum metal is strong, and the two are not prone to detachment, thereby improving the overall structural stability of the bonding assembly 7.

In the embodiments of the present application, the tensile shear strength has a well-known meaning in the art. Specifically, the shear strength of the bonding layer 723 refers to the shear force that the bonding layer 723 can withstand per unit area when the bonding layer 723 is destroyed, which can be tested in accordance with GB/T7124-2008. For example, the test can be performed as follows: the bonding layer 723 of the connecting member 72 is bonded to the surface of the aluminum metal and left standing within 20 min, and the tensile shear strength of the bonding layer 723 is greater than or equal to 0.7 MPa, optionally 0.7 MPa to 1.7 MPa, optionally 1.34 MPa to 1.7 MPa, and optionally 1.34 MPa to 1.5 MPa. The bonding layer 723 of the connecting member 72 being bonded to the surface of the aluminum metal and left standing within 20 min means that timing is started when the bonding layer 723 is bonded to the surface of the aluminum metal, and the tensile shear strength is tested within 20 min. For another example, the test can be performed as follows: the bonding layer 723 is bonded to the surface of the aluminum metal and left standing for more than 3 days, and the tensile shear strength of the bonding layer 723 is greater than or equal to 1.5 MPa, optionally 1.5 MPa to 3.0 MPa, optionally 2.1 MPa to 3.0 MPa, and optionally 2.1 MPa to 2.32 MPa.

Exemplarily, the bonding layer 723 of the bonding assembly 7 is configured to be bonded to metal, and the tensile shear strength of the bonding layer 723 may be 0.7 MPa, 0.8 MPa, 0.9 MPa, 1.0 MPa, 1.1 MPa, 1.2 MPa, 1.3 MPa, 1.4 MPa, 1.5 MPa, 1.6 MPa, 1.7 MPa, 1.8 MPa, 1.9 MPa, 2.0 MPa, 2.1 MPa, 2.2 MPa, 2.3 MPa, 2.4 MPa, 2.5 MPa, 2.6 MPa, 2.7 MPa, 2.8 MPa, 3.0 MPa, or a range defined by any two of the above values.

In some embodiments, when the bonding assembly 7 is assembled to the battery, the bonding assembly 7 may be in contact with a housing of the battery cell, the housing may be made of an organic polymer material. For example, the organic polymer may include at least one of polyethylene terephthalate PET material and polycarbonate. Optionally, the organic polymer includes a polyethylene terephthalate PET material. The bonding layer 723 of the bonding assembly 7 is configured to be bonded to the organic polymer, and the tensile shear strength of the bonding layer 723 is greater than or equal to 0.7 MPa, optionally 0.7 MPa to 3.0 MPa, and optionally 1.34 MPa to 3.0 MPa. When the tensile shear strength of the bonding layer 723 is in the above range, the bonding force between the bonding layer 723 and the organic polymer is strong, so that the two are not prone to detachment, thereby improving the overall structural stability of the bonding assembly 7.

Exemplarily, the bonding layer 723 of the bonding assembly 7 is configured to be bonded to PET, and the tensile shear strength of the bonding layer 723 is greater than or equal to 0.7 MPa, optionally 0.7 MPa to 3.0 MPa, and optionally 1.34 MPa to 3.0 MPa.

When the tensile shear strength of the bonding layer 723 is in the above range, the bonding force between the bonding layer 723 and PET is strong, so that the two are not prone to detachment, thereby improving the overall structural stability of the bonding assembly 7.

In the embodiments of the present application, the tensile shear strength has a well-known meaning in the art. Specifically, the shear strength of the bonding layer 723 refers to the shear force that the bonding layer 723 can withstand per unit area when the bonding layer 723 is destroyed, which can be tested in accordance with GB/T7124-2008. For example, the test can be performed as follows: the bonding layer 723 of the connecting member 72 is bonded to the surface of PET and left standing within 20 min, and the tensile shear strength of the bonding layer 723 is greater than or equal to 0.7 MPa, optionally 0.7 MPa to 1.7 MPa, optionally 1.34 MPa to 1.7 MPa, and optionally 1.34 MPa to 1.5 MPa. The bonding layer 723 of the connecting member 72 being bonded to the surface of PET and left standing within 20 min means that timing is started when the bonding layer 723 is bonded to the surface of PET, and the tensile shear strength is tested within 20 min. For another example, the test can be performed as follows: the bonding layer 723 is bonded to the surface of PET and left standing for more than 3 days, and the tensile shear strength of the bonding layer 723 is greater than or equal to 1.5 MPa, optionally 1.5 MPa to 3.0 MPa, optionally 2.1 MPa to 3.0 MPa, and optionally 2.1 MPa to 2.32 MPa.

Exemplarily, the bonding layer 723 of the bonding assembly 7 is configured to be bonded to PET, and the tensile shear strength of the bonding layer 723 may be 0.7 MPa, 0.8 MPa, 0.9 MPa, 1.0 MPa, 1.1 MPa, 1.2 MPa, 1.3 MPa, 1.4 MPa, 1.5 MPa, 1.6 MPa, 1.7 MPa, 1.8 MPa, 1.9 MPa, 2.0 MPa, 2.1 MPa, 2.2 MPa, 2.3 MPa, 2.4 MPa, 2.5 MPa, 2.6 MPa, 2.7 MPa, 2.8 MPa, 3.0 MPa, or a range defined by any two of the above values.

In some embodiments, the bonding layer 723 includes at least one of an acrylate polymer and an olefin polymer. Optionally, the bonding layer 723 includes the acrylate polymer. The bonding force between the bonding layer 723 and the battery cell is stronger. In addition, since a primer coating process is required when the bonding layer 723 and the main body member 71 are directly bonded, the connecting layer 721 is disposed between the bonding layer 723 and the main body member 71 in the embodiments of the present application, processes such as the primer coating process can be omitted on the basis of improving the bonding strength between the main body member 71 and the bonding layer 723.

Exemplarily, the acrylate polymer includes at least one of polymethyl methacrylate, polyethyl acrylate, and polybutyl acrylate.

In some embodiments, a thickness of the bonding layer 723 is 15 µm to 25 µm. When the thickness of the bonding layer 723 is in the above range, the bonding force between the bonding layer 723 and the battery cell is strong.

Exemplarily, the thickness of the bonding layer 723 may be 15 µm, 16 µm, 17 µm, 18 µm, 19 µm, 20 µm, 21 µm, 22 µm, 23 µm, 24 µm, 25 µm, or a range defined by any two of the above values.

In the embodiments of the present application, the thicknesses of the layers in the bonding assembly 7 have well-known meanings in the art and can be tested using devices and methods well known in the art. For example, the thicknesses of the layers in the bonding assembly 7 are measured using a micrometer.

### [Battery]

According to a second aspect, an embodiment of the present application provides a battery.

As shown in FIG. 2, the battery in this embodiment of the present application may include one battery cell 5 or a plurality of battery cells 5. In a case that the battery includes a plurality of battery cells 5, the battery may include a battery module 4 or a battery pack.

In a case that the battery includes one or more battery cells 5, a bonding assembly 7 may be disposed outside the battery cell 5. A bonding layer 723 of the bonding assembly 7 is bonded to a surface of the battery cell 5. The bonding force of the bonding assembly 7 is strong, so that the bonding force between the bonding assembly 7 and the battery cell 5 can be improved, thereby improving the structural stability of the battery. Optionally, one side of the bonding assembly 7 is connected to the battery cell 5, and the other side may be connected to a box of the battery.

In a case that the battery includes a plurality of battery cells 5, a bonding assembly 7 may be disposed between two adjacent battery cells 5. A bonding layer 723 of the bonding assembly 7 is bonded to a surface of the battery cell 5. The bonding force of the bonding assembly 7 is strong, so that the bonding force between the two adjacent battery cells 5 can be improved, thereby improving the structural stability of the battery.

In some embodiments, the battery cell 5 includes two first surfaces opposite each other and two second surfaces opposite each other. The first surface is connected to the two second surfaces, and an area of the first surface is greater than an area of the second surface. The first surface is disposed opposite the bonding assembly 7, and the first surface is bonded to the bonding layer 723. Since the area of the first surface is relatively large, the first surface is bonded to the bonding layer 723, so that the bonding force between the two adjacent battery cells 5 can be further improved, thereby further improving the structural stability of the battery.

In some embodiments, the battery may further include a box. The box and the battery cell 5 are connected through the bonding assembly 7. The connection through the bonding assembly 7 can improve the connection stability between the box and the battery cell 5.

In some embodiments, the battery cell 5 may include a positive electrode plate, a negative electrode plate, and a separator, where the separator is located between the positive electrode plate and the negative electrode plate.

### [Positive electrode plate]

In some embodiments, the battery cell further includes a positive electrode plate.

The positive electrode plate includes a positive electrode current collector and a positive electrode active material layer provided on at least one surface of the positive electrode current collector, where the positive electrode active material layer includes a positive electrode active material.

As an example, the positive electrode current collector has two opposite surfaces in its thickness direction, and the positive electrode active material layer is provided on either or both of the two opposite surfaces of the positive electrode current collector.

In some embodiments, the positive electrode current collector may adopt a metal foil or a composite current collector. For example, as the metal foil, an aluminum foil may be used. The composite current collector may include a polymer substrate and a metal layer formed on at least one surface of the polymer substrate. The composite current collector may be formed by forming a metal material (aluminum, aluminum alloy, nickel, nickel alloy, titanium, titanium alloy, silver, silver alloy, or the like) on a polymer substrate (such as a substrate of polypropylene (PP), polyethylene terephthalate (PET), polybutylene terephthalate (PBT), polystyrene (PS), polyethylene (PE), or the like).

In some embodiments, the positive electrode active material may adopt a positive electrode active material for battery cells well known in the art. As an example, the positive electrode active material may include at least one of the following materials: a layered positive electrode active material (such as ternary, lithium/sodium nickelate, lithium/sodium cobaltate, lithium/sodium manganate, lithium/sodium-rich layered and rock salt phase layered materials), an olivine-type phosphate active material, and a spinel-structured positive electrode active material (such as spinel lithium manganate, spinel nickel manganese lithium, lithium-rich spinel lithium manganate and nickel manganese lithium).

Exemplarily, the layered positive electrode active material has a general formula of LiₓA_{y}NiₐCo_{b}Mn_{c}M_{(1-a-b-c)}Y_{z}, where 0 ≤ x ≤ 2.1, 0 ≤ y ≤ 2.1, and 0.9 ≤ x + y ≤ 2.1; 0 ≤ a ≤ 1, 0 ≤ b ≤ 1, 0 ≤ c ≤ 1, and 0.1 ≤ a + b + c ≤ 1; 1.8 ≤ z ≤ 3.5; A includes one or more of Na, K, and Mg; M includes one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y includes one or more of O and F. Specifically, the layered positive electrode active material may include lithium cobaltate LCO, lithium nickelate LNO, lithium manganate LMO, and the like.

Optionally, the layered positive electrode active material is a ternary material. For example, 0 < a ≤ 1, 0 < b ≤ 1, and 0 < c ≤ 1. Exemplarily, one or more of LiNi_{1/3}Co_{1/3}Mn_{1/3}O₂ (NCM333), LiNi_{0.8}Co_{0.1}Mn_{0.1}O₂ (NCM811), and LiNi_{0.5}Co_{0.2}Mn_{0.3}O₂ (NCM523) are used.

Exemplarily, the olivine-type phosphate active material has a general formula of LiₓA_{y}MeₐM_{b}P_{1-c}X_{c}Y_{z}, where 0 ≤ x ≤ 1.3, 0 ≤ y ≤ 1.3, and 0.9 ≤ x + y ≤ 1.3; 0.9 ≤ a ≤ 1.5, 0 ≤ b ≤ 0.5, and 0.9 ≤ a + b ≤ 1.5; 0 ≤ c ≤ 0.5; 3 ≤ z ≤ 5; A includes one or more of Na, K, and Mg; Me includes one or more of Mn, Fe, Co, and Ni; M includes one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X includes one or more of S, Si, Cl, B, C, and N; and Y includes one or more of O and F. Specifically, the olivine-type phosphate active material includes one or more of LiFePO₄, LiMnPO₄, LiNiPO₄, and LiCoPO₄.

Exemplarily, the spinel-structured positive electrode active material has a general formula of LiₓA_{y}MnₐM₂₋ₐY_{z}, where 0 ≤ x ≤ 2, 0 ≤ y ≤ 1, and 0.9 ≤ x + y ≤ 2; 0.5 ≤ a ≤ 2; 3 ≤ z ≤ 5; A includes one or more of Na, K, and Mg; M includes one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; Y includes one or more of O and F. Specifically, the spinel-structured positive electrode active material includes one or more of LiMn₂O₄, LiNi_{0.5}Mn_{1.5}O₄, LiCr_{0.3}Mn_{1.7}O₄, Li_{1.1}Al_{0.1}Mn_{1.9}O₄, Li₂Mn₂O₄, and Li_{1.5}Mn₂O₄.

During charging and discharging of the battery cell, active ions such as Li are intercalated, deintercalated, and consumed, and a molar content of Li in the battery cell is different when discharged to different states. In the enumeration of the positive electrode active material in the embodiments of the present application, the molar content of Li is in an initial state of the material, that is, a state before feeding, and when the positive electrode active material is used in a battery system, after charge and discharge cycles, the molar content of Li may change.

In the enumeration of the positive electrode active material in the embodiments of the present application, a molar content of oxygen O is only a theoretical state value, and lattice oxygen release may cause the molar content of oxygen O to change. In practice, the molar content of oxygen O fluctuates.

In some embodiments, the positive electrode active material layer further optionally includes a binder. As an example, the binder may include at least one of polyvinylidene fluoride (PVDF), polytetrafluoroethylene (PTFE), vinylidene fluoride-hexafluoropropylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode active material layer further optionally includes a conductive agent. As an example, the conductive agent may include at least one of superconducting carbon, acetylene black, carbon black, Ketjenblack, carbon dots, carbon nanotubes, graphene, and carbon nanofiber.

In some embodiments, the positive electrode plate can be prepared by the following method: dispersing the components for preparing the positive electrode plate, such as the positive electrode active material, the conductive agent, the binder, and any other components, in a solvent (such as N-methylpyrrolidone) to form a positive electrode slurry; and applying the positive electrode slurry on the positive electrode current collector, followed by processes such as drying and cold pressing to obtain the positive electrode plate.

### [Negative electrode plate]

In some embodiments, the battery cell further includes a negative electrode plate.

In some embodiments, the negative electrode plate includes a negative electrode current collector and a negative electrode film layer provided on at least one surface of the negative electrode current collector and including a negative electrode active material. For example, the negative electrode current collector has two opposite surfaces in its thickness direction, and the negative electrode film layer is provided on either or both of the two opposite surfaces of the negative electrode current collector.

The negative electrode active material may adopt a negative electrode active material for battery cells well known in the art. As an example, the negative electrode active material may include but is not limited to at least one of natural graphite, artificial graphite, soft carbon, hard carbon, a silicon-based material, a tin-based material, and lithium titanate. The silicon-based material may include at least one of elemental silicon, silicon oxide, silicon-carbon composite, silicon-nitrogen composite, and a silicon alloy material. The tin-based material may include at least one of elemental tin, tin oxide, and a tin alloy material.

In some embodiments, the negative electrode film layer further optionally includes a negative electrode conductive agent. The embodiments of the present application have no particular limitation on the type of the negative electrode conductive agent. As an example, the negative electrode conductive agent may include at least one of superconducting carbon, conductive graphite, acetylene black, carbon black, Ketjenblack, carbon dots, carbon nanotubes, graphene, and carbon nanofiber. In some embodiments, based on a total weight of the negative electrode film layer, a mass percentage of the negative electrode conductive agent is less than or equal to 5wt%.

In some embodiments, the negative electrode film layer further optionally includes a negative electrode binder. The embodiments of the present application have no particular limitation on the type of the negative electrode binder. As an example, the negative electrode binder may include at least one of styrene-butadiene rubber (SBR), water-soluble unsaturated resin SR-1B, aqueous acrylic resin (for example, polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, based on the total weight of the negative electrode film layer, a mass percentage of the negative electrode binder is less than or equal to 5wt%.

In some embodiments, the negative electrode film layer further optionally includes another additive. As an example, the another additive may include a thickener, for example, sodium carboxymethyl cellulose (CMC-Na) or a PTC thermistor material. In some embodiments, based on the total weight of the negative electrode film layer, a mass percentage of the another additive is less than or equal to 2wt%.

In some embodiments, the negative electrode current collector may adopt a metal foil or a composite current collector. As an example of the metal foil, a copper foil may be used. The composite current collector may include a polymer substrate and a metal material layer formed on at least one surface of the polymer substrate. As an example, the metal material may include at least one of copper, a copper alloy, nickel, a nickel alloy, titanium, a titanium alloy, silver, and a silver alloy. As an example, the polymer substrate may include at least one of polypropylene (PP), polyethylene terephthalate (PET), polybutylene terephthalate (PBT), polystyrene (PS), and polyethylene (PE).

The negative electrode film layer is typically formed by applying a negative electrode slurry on the negative electrode current collector, followed by drying and cold pressing. The negative electrode slurry is typically formed by dispersing the negative electrode active material, the optional conductive agent, the optional binder, other optional additives in a solvent and stirring fully. The solvent may be N-methylpyrrolidone (NMP) or deionized water, but is not limited thereto.

The negative electrode plate does not exclude other additional functional layers other than the negative electrode film layer. For example, in some embodiments, the negative electrode plate in the embodiments of the present application further includes a conductive primer coating (for example, consisting of a conductive agent and a binder) provided on a surface of the negative electrode current collector and sandwiched between the negative electrode current collector and the negative electrode film layer. In some other embodiments, the negative electrode plate in the embodiments of the present application further includes a protective layer covering a surface of the negative electrode film layer.

### [Separator]

In some embodiments, the battery cell further includes a separator.

The present application has no particular limitation on the type of the separator, and any well-known porous separator having good chemical stability and mechanical stability can be used.

In some embodiments, a material of the separator may include at least one of glass fiber, non-woven fabric, polyethylene, polypropylene, and polyvinylidene fluoride. The separator may be a single-layer film or a multi-layer composite film, without particular limitation. When the separator is a multi-layer composite film, materials of layers may be the same or different, without particular limitation.

In some embodiments, the positive electrode plate, the separator, and the negative electrode plate can be made into an electrode assembly through a winding process and/or a lamination process.

In some embodiments, the battery cell may include an outer package. The outer package may be used to encapsulate the above electrode assembly and an electrolyte.

In some embodiments, the outer package of the battery cell may be a hard shell, such as a hard plastic shell, an aluminum shell, and a steel shell. The outer package of the battery cell may alternatively be a soft package, such as a pouch soft package. A material of the soft package may be plastic, such as at least one of polypropylene (PP), polybutylene terephthalate (PBT), and polybutylene succinate (PBS).

### [Electrolyte]

In some embodiments, the battery cell further includes an electrolyte.

During charging and discharging of the battery cell, active ions are intercalated and deintercalated back and forth between the positive electrode plate and the negative electrode plate, and the electrolyte plays a role of conducting active ions between the positive electrode plate and the negative electrode plate. A type of the electrolyte is not particularly limited in the embodiments of the present application and may be selected based on actual needs.

The electrolyte includes an electrolytic salt and a solvent. The types of the electrolytic salt and the solvent are not specifically limited and can be selected based on actual needs.

When the battery cell of the present application is a lithium-ion battery, as an example, the electrolytic salt may include but is not limited to at least one of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato) phosphate (LiDFOP), and lithium tetrafluoro(oxalato) phosphate (LiTFOP).

When the battery cell of the present application is a sodium-ion battery, as an example, the electrolytic salt may include but is not limited to at least one of sodium hexafluorophosphate (NaPF₆), sodium tetrafluoroborate (NaBF₄), sodium perchlorate (NaClO₄), sodium hexafluoroarsenate (NaAsF₆), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalato)borate (NaBOB), sodium difluorophosphate (NaPO₂F₂), sodium difluoro bis(oxalato) phosphate (NaDFOP), and sodium tetrafluoro(oxalato) phosphate (NaTFOP).

As an example, the solvent may include but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and diethyl sulfone (ESE).

In some embodiments, the electrolyte further optionally includes an additive. For example, the additive may include a negative electrode film-forming additive or a positive electrode film-forming additive, or may include an additive capable of improving some performance of the battery, for example, an additive for improving the overcharge performance of the battery, an additive for improving the high-temperature performance of the battery, or an additive for improving the low-temperature performance of the battery.

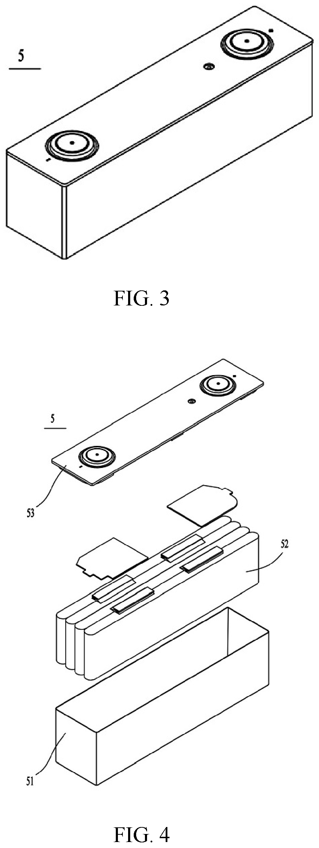

The battery cell is not limited to any particular shape in the present application, and may be cylindrical, rectangular, or of any other shapes. FIG. 3 shows a battery cell 5 of a rectangular structure as an example.

In some embodiments, as shown in FIG. 4, the outer package may include a housing 51 and a cover plate 53. The housing 51 may include a bottom plate and side plates connected to the bottom plate. The bottom plate and the side plates enclose an accommodating cavity. The housing 51 has an opening in communication with the accommodating cavity. The cover plate 53 is configured to cover the opening to seal the accommodating cavity. The positive electrode plate, the negative electrode plate, and the separator may form an electrode assembly 52 through a winding process and/or a lamination process. The electrode assembly 52 is encapsulated in the accommodating cavity. The electrolyte is infiltrated in the electrode assembly 52. There may be one or more electrode assemblies 52 included in the battery cell 5, and a quantity can be adjusted based on needs.

A preparation method of the battery cell in the embodiments of the present application is well known. In some embodiments, the positive electrode plate, the separator, the negative electrode plate, and the electrolyte can be assembled to form a battery cell. As an example, the positive electrode plate, the separator, and the negative electrode plate can be formed into an electrode assembly through a winding process and/or a lamination process. The electrode assembly is placed in the outer package. After drying, the electrolyte is injected, and processes such as vacuum packaging, standing, formation, and shaping are performed to obtain the battery cell.

In some embodiments of the present application, the battery cell in the embodiments of the present application can be assembled into a battery module. There are a plurality of battery cells included in the battery module, and a specific quantity can be adjusted based on the application and capacity of the battery module.

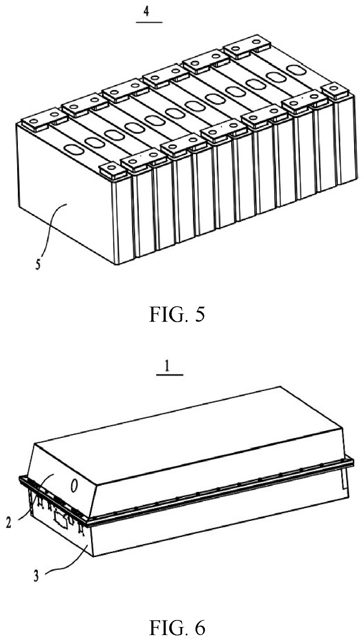

FIG. 5 is a schematic diagram of a battery module 4 as an example. As shown in FIG. 5, in the battery module 4, a plurality of battery cells 5 can be arranged sequentially along a length direction of the battery module 4. Certainly, the battery cells 5 can alternatively be arranged in any other manner. Further, the plurality of battery cells 5 can be fixed by fasteners. A bonding assembly (not shown in FIG. 5) may be disposed between two adjacent battery cells.

Optionally, the battery module 4 may further include an enclosure having an accommodating space, and a plurality of battery cells 5 are accommodated in the accommodating space.

In some embodiments, the above battery module can alternatively be assembled into a battery pack, and a quantity of battery modules included in the battery pack can be adjusted based on the application and capacity of the battery pack.

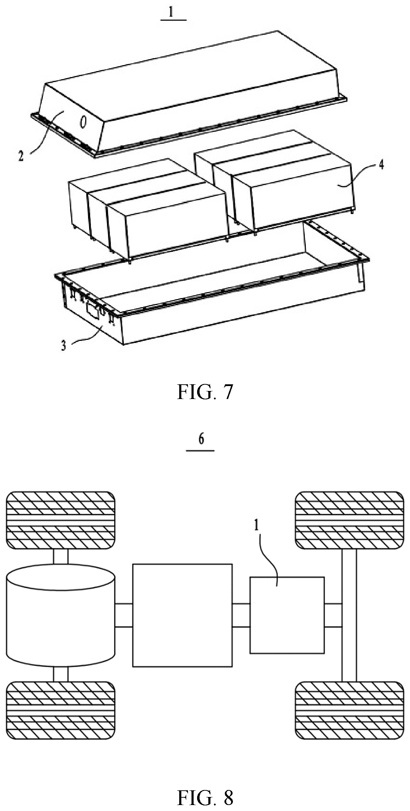

FIG. 6 and FIG. 7 are schematic diagrams of a battery pack 1 as an example. As shown in FIG. 6 and FIG. 7, the battery pack 1 may include a battery box and a plurality of battery modules 4 disposed in the battery box. The battery box includes an upper box body 2 and a lower box body 3. The upper box body 2 is used to fit the lower box body 3 and form a closed space for accommodating the battery modules 4. The plurality of battery modules 4 can be arranged in the battery box in any manner.

### [Electric apparatus]

According to a third aspect, an embodiment of the present application provides an electric apparatus. The electric apparatus includes at least one of the battery cell, the battery module, or the battery pack according to the embodiments of the present application. The battery cell, the battery module, or the battery pack can be used as a power source of the electric apparatus or an energy storage unit of the electric apparatus. The electric apparatus may be but is not limited to a mobile device (such as a mobile phone or a laptop computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electric apparatus can select the battery cell, the battery module, or the battery pack based on its usage needs.

FIG. 8 is a schematic diagram of an electric apparatus 6 as an example. The electric apparatus 6 is a pure electric vehicle, a hybrid electric vehicle, a plug-in hybrid electric vehicle, or the like. In order to meet the demand of the electric apparatus 6 for high power and high energy density, a battery pack or a battery module can be used.

As another example, the electric apparatus may be a mobile phone, a tablet computer, a laptop computer, or the like. Such electric apparatus is generally required to be light and thin and may use a battery cell as its power source.

### Examples

Content disclosed in the embodiments of the present application is described more specifically in the following examples. These examples are only for illustrative purposes because various modifications and changes made without departing from the scope of the content disclosed in the embodiments of the present application are apparent to those skilled in the art. Unless otherwise stated, all parts, percentages, and ratios reported in the following examples are based on mass, and all reagents used in the examples can be commercially available or obtained by conventional synthesis methods, and can be used directly without further processing, and the instruments used in the examples can be commercially available.

### Example 1

A battery includes two battery cells, where a bonding assembly is disposed between the two battery cells. The bonding assembly includes a main body member and a connecting member. The connecting member is disposed on two sides of the main body member, and the connecting member includes a substrate, a connecting layer, and a bonding layer. The connecting layer bonds the main body member to the substrate. The bonding layer is bonded to a surface of the substrate facing away from the connecting layer and bonded to a first surface of the battery cell.

A material of the main body member includes an organosiloxane polymer (specifically methyl vinyl siloxane), with a thickness of 2000 µm.

A material of the connecting layer includes an organosiloxane polymer (specifically methyl silicone rubber), with a thickness of 30 µm.

A material of the substrate includes polyethylene terephthalate PET, with a thickness of 10 µm.

A material of the bonding layer includes an acrylate polymer such as polymethyl methacrylate PMMA, with a thickness of 20 µm.

### Comparative Example 1

The battery includes two battery cells, where a bonding assembly is disposed between the two battery cells. The bonding assembly includes a main body member and a connecting member. The connecting member is disposed on two sides of the main body member. A primer coating is provided between the connecting member and the main body member. The primer coating includes a silane coupling agent.

A material of the main body member includes an organosiloxane polymer, with a thickness of 2000 µm.

A material of the connecting member includes an acrylate polymer such as polymethyl methacrylate PMMA, with a thickness of 20 µm.

### Examples 2-1 and 2-3

These examples differ from Example 1 in that the material of the connecting layer is adjusted.

In Example 2-1, the connecting layer adopts an EPDM material.

In Example 2-2, the connecting layer adopts cis-1,4-polyisoprene.

In Example 2-3, the connecting layer adopts an organosiloxane polymer PMVS.

### Example 3

This example differs from Example 1 in that the material of the bonding layer is adjusted, and the bonding layer in Example 3 is polyethyl acrylate PEA.

### Examples 4-1 to 4-4

These examples differ from Example 1 in that the thickness of the connecting layer is adjusted.

### Examples 4-5 and 4-6

These examples differ from Example 1 in that the thickness of the main body member is adjusted.

### Examples 5-1 to 5-4

These examples differ from Example 1 in that the thickness of the bonding layer is adjusted.

### Examples 6-1 to 6-3

These examples differ from Example 1 in that the material of the main body member is adjusted. In Example 6-1, the main body member adopts cis-1,4-polybutadiene. In Example 6-2, the main body member adopts cis-1,4-polyisoprene. In Example 6-3, the main body member adopts polydimethylsiloxane PDMS.

### Example 7

This example differs from Example 1 in that the material of the substrate is adjusted, and the material of the substrate is polycarbonate PC.

### Examples 8-1 and 8-2

These examples differ from Example 1 in that the thickness of the substrate is adjusted.

The relevant parameters of the examples and comparative examples are shown in Table 1 and Table 2.

### Tests

### 1. Test of shear strength

Sample preparation and testing were performed in accordance with the standard GB/T7124-2008. For example, the test was performed as follows: the connecting layer of the connecting member was bonded to the surface of the main body member and left standing within 20 min, and the tensile shear strength of the connecting layer was recorded as the first tensile shear strength of the connecting layer.

The connecting layer of the connecting member was bonded to the surface of the main body member and left standing for more than 3 days, and the tensile shear strength of the connecting layer was recorded as the second tensile shear strength of the connecting layer.

Sample preparation and testing were performed in accordance with the standard GB/T7124-2008. For example, the test was performed as follows: the bonding layer of the connecting member was bonded to an aluminum shell surface of the battery cell and left standing within 20 min, and the tensile shear strength of the bonding layer was recorded as the first tensile shear strength of the bonding layer.

The bonding layer of the connecting member was bonded to the aluminum shell surface of the battery cell and left standing for more than 3 days, and the tensile shear strength of the bonding layer was recorded as the second tensile shear strength of the bonding layer.

### Test results

The test results were shown in Table 1 and Table 2.

**Table 1**

| Item | Main body member | Connecting layer | | Thickness ratio of main body member and connecting layer | Substrate | Bonding layer |
|---|---|---|---|---|---|---|
| | Thickness (µm) | Thickness (µm) | Elastic modulus (MPa) | | Thickness (µm) | Thickness (µm) |
| Example 1 | 2000 | 30 | 3 | 67 | 10 | 20 |
| Example 2-1 | 2000 | 30 | 3 | 67 | 10 | 20 |
| Example 2-2 | 2000 | 30 | 3 | 67 | 10 | 20 |
| Example 2-3 | 2000 | 30 | 3 | 67 | 10 | 20 |
| Example 3 | 2000 | 30 | 3 | 67 | 10 | 20 |
| Example 4-1 | 2000 | 12 | 5 | 167 | 10 | 20 |
| Example 4-2 | 2000 | 15 | 5 | 133 | 10 | 20 |
| Example 4-3 | 2000 | 35 | 5 | 57 | 10 | 20 |
| Example 4-4 | 2000 | 40 | 5 | 50 | 10 | 20 |
| Example 4-5 | 1000 | 35 | 5 | 29 | 10 | 20 |
| Example 4-6 | 3000 | 35 | 5 | 86 | 10 | 20 |
| Example 5-1 | 2000 | 30 | 4 | 67 | 10 | 13 |
| Example 5-2 | 2000 | 30 | 4 | 67 | 10 | 15 |
| Example 5-3 | 2000 | 30 | 4 | 67 | 10 | 25 |
| Example 5-4 | 2000 | 30 | 4 | 67 | 10 | 27 |
| Example 6-1 | 2000 | 30 | 4 | 67 | 10 | 27 |
| Example 6-2 | 2000 | 30 | 4 | 67 | 10 | 27 |
| Example 6-3 | 2000 | 30 | 4 | 67 | 10 | 27 |
| Example 7 | 2000 | 30 | 3 | 67 | 10 | 20 |
| Example 8-1 | 2000 | 30 | 3 | 67 | 5 | 20 |
| Example 8-2 | 2000 | 30 | 3 | 67 | 15 | 20 |
| Comparative Example 1 | 2000 | None | / | None | None | 20 |

**Table 2**

| Item | Between connecting layer and main body member | | Between bonding layer and first surface of battery cell | |
|---|---|---|---|---|
| | First tensile shear strength (MPa) | Second tensile shear strength (MPa) | First tensile shear strength (MPa) | Second tensile shear strength (MPa) |
| Example 1 | 0.50 | 0.65 | 1.37 | 2.18 |
| Example 2-1 | 0.45 | 0.56 | 1.37 | 2.18 |
| Example 2-2 | 0.42 | 0.53 | 1.35 | 2.18 |
| Example 2-3 | 0.52 | 0.66 | 1.40 | 2.21 |
| Example 3 | 0.50 | 0.65 | 1.10 | 1.98 |
| Example 4-1 | 0.45 | 0.57 | 1.34 | 2.16 |
| Example 4-2 | 0.46 | 0.58 | 1.35 | 2.17 |
| Example 4-3 | 0.52 | 0.68 | 1.37 | 2.18 |
| Example 4-4 | 0.54 | 0.72 | 1.37 | 2.18 |
| Example 4-5 | 0.50 | 0.65 | 1.37 | 2.18 |
| Example 4-6 | 0.50 | 0.65 | 1.37 | 2.18 |
| Example 5-1 | 0.50 | 0.65 | 1.05 | 1.80 |
| Example 5-2 | 0.50 | 0.65 | 1.10 | 1.95 |
| Example 5-3 | 0.50 | 0.65 | 1.40 | 2.30 |
| Example 5-4 | 0.50 | 0.65 | 1.42 | 2.32 |
| Example 6-1 | 0.44 | 0.58 | 1.15 | 1.78 |
| Example 6-2 | 0.48 | 0.62 | 1.08 | 1.69 |
| Example 6-3 | 0.56 | 0.71 | 1.21 | 2.11 |
| Example 7 | 0.50 | 0.62 | 1.18 | 1.97 |
| Example 8-1 | 0.58 | 0.68 | 1.29 | 2.33 |
| Example 8-2 | 0.51 | 0.57 | 1.16 | 1.96 |
| Comparative Example 1 | 0.28 | 0.32 | 1.10 | 1.60 |

It can be seen from Table 1 and Table 2 that in Comparative Example 1, PMMA is bonded to the main body member, but due to the low surface energy and high crystallinity of polyacrylate, it is difficult for the polyacrylate to be effectively bonded to the main body member. Therefore, the primer coating needs to be applied on the surface of the main body member, and the bonding strength between PMMA and the main body member is improved through the primer coating. However, due to the instability of the primer coating process, the bonding between PMMA and the main body member is still unstable, so that the two are prone to detachment.

In the embodiments of the present application, the connecting member with a multi-layer structure is used, so that the connecting layer of the connecting member is directly bonded to the main body member, and the connecting layer adopts a non-polyacrylate material, which has high compatibility and adhesion with the main body member, improving the bonding force between the connecting member and the main body member. In addition, the bonding layer of the connecting member adopts a polyacrylate material and still can be effectively bonded to the battery cell.

Moreover, in the present application, through adjustment of the material of the connecting member, it is found that when both the connecting member and the main body member adopt the organosiloxane polymer, the bonding force between the two is relatively stronger. In addition, through adjustment of parameters such as the thickness of the connecting member, the bonding force between the connecting member and the main body member can also be improved to some extent. Through adjustment of parameters such as the thickness and material of the bonding layer, the bonding force between the bonding layer and the battery cell can be improved to some extent.

Although illustrative embodiments have been demonstrated and described, those skilled in the art should understand that the above embodiments should not be construed as limiting the present application, and that the embodiments may be changed, replaced, and modified without departing from the spirit, principle, and scope of the present application.

## Claims

1. A bonding assembly, comprising:
a main body member comprising a first rubber; and
a connecting member connected to at least one side of the main body member along its thickness direction; wherein
the connecting member comprises:
a substrate;
a connecting layer provided on a side of the substrate facing the main body member and bonding the substrate to the main body member, wherein the connecting layer comprises a second rubber, and materials of the second rubber and the first rubber are the same or different; and
a bonding layer bonded to a side of the substrate facing away from the connecting layer.

2. The bonding assembly according to claim 1, wherein
the connecting layer is bonded to a surface of the main body member, and the tensile shear strength of the connecting layer is greater than or equal to 0.42 MPa.

3. The bonding assembly according to claim 2, wherein
the tensile shear strength of the connecting layer is 0.42 MPa to 0.72 MPa.

4. The bonding assembly according to any one of claims 1 to 3, wherein
elastic moduli of the first rubber and the second rubber are each independently selected from a range of 0.1 MPa to 20 MPa.

5. The bonding assembly according to claim 4, wherein
the elastic moduli of the first rubber and the second rubber are each independently selected from a range of 0.1 MPa to 5 MPa.

6. The bonding assembly according to claim 4 or 5, wherein
the first rubber and the second rubber each independently comprise at least one of a polyolefin polymer and an organosiloxane polymer.

7. The bonding assembly according to claim 6, wherein
the polyolefin polymer comprises at least one of cis-1,4-polyisoprene, cis-1,4-polybutadiene, polychloroprene, and ethylene propylene diene monomer terpolymer; and/or
the organosiloxane polymer comprises at least one of polydimethylsiloxane PDMS, polymethylvinylsiloxane PMVS, polymethylphenylvinylsiloxane, and polyfluorosiloxane.

8. The bonding assembly according to any one of claims 1 to 7, wherein
a ratio of a thickness of the connecting layer to a thickness of the main body member is 1:(29 to 200).

9. The bonding assembly according to claim 8, wherein the ratio of the thickness of the connecting layer to the thickness of the main body member is 1:(29 to 167).

10. The bonding assembly according to claim 8 or 9, wherein
the thickness of the connecting layer is 15 µm to 35 µm; or
the thickness of the main body member is 1000 µm to 3000 µm.

11. The bonding assembly according to any one of claims 1 to 10, wherein
the bonding layer is configured to be bonded to a metal surface, and the tensile shear strength of the bonding layer is greater than or equal to 1.34 MPa; or
the bonding layer is configured to be bonded to an organic polymer surface, and the tensile shear strength of the bonding layer is greater than or equal to 1.34 MPa.

12. The bonding assembly according to claim 11, wherein the tensile shear strength of the bonding layer is 1.34 MPa to 3.0 MPa.

13. The bonding assembly according to any one of claims 1 to 12, wherein
the bonding layer comprises an acrylate polymer, and the acrylate polymer comprises at least one of polymethyl methacrylate, polyethyl acrylate, and polybutyl acrylate.

14. The bonding assembly according to any one of claims 1 to 13, wherein a thickness of the bonding layer is 15 µm to 25 µm.

15. The bonding assembly according to any one of claims 1 to 14, wherein the substrate comprises at least one of polyethylene terephthalate, polypropylene, polycarbonate, and polyamide.

16. The bonding assembly according to any one of claims 1 to 15, wherein a thickness of the substrate is 5 µm to 15 µm.

17. The bonding assembly according to any one of claims 1 to 16, wherein the connecting member is connected to two sides of the main body member along its thickness direction.

18. A battery, comprising:
a battery cell; and
the bonding assembly according to any one of claims 1 to 17, wherein the bonding assembly is connected to the battery cell, and the bonding layer of the bonding assembly is bonded to a surface of the battery cell.

19. The battery according to claim 18, wherein a plurality of battery cells are provided, and the bonding assembly is disposed between two adjacent battery cells.

20. The battery according to claim 18 or 19, wherein the battery cell comprises two first surfaces opposite each other and two second surfaces opposite each other; the first surface is connected to the two second surfaces; an area of the first surface is greater than an area of the second surface; the first surface is disposed opposite the bonding assembly; and the first surface is bonded to the bonding layer.

21. An electric apparatus, comprising the battery according to any one of claims 18 to 20.
